# EUROPÄISCHE PATENTSCHRIFT

(11) **EP 3 012 578 B1**
(45) Veröffentlichungstag und Bekanntmachung des Hinweises auf die Patenterteilung: **31.03.2021**
(21) Anmeldenummer: 15190190.7
(22) Anmeldetag: 16.10.2015
(51) Int. Cl.: G01B 11/25, G01N 21/958, G01M 11/00

(54) **VERFAHREN UND VORRICHTUNG ZUR ERMITTLUNG EINER DREIDIMENSIONALEN VERZERRUNG**
METHOD AND DEVICE FOR DETECTING THREE-DIMENSIONAL DISTORTION
PROCEDE ET DISPOSITIF DE DETERMINATION D'UNE DEFORMATION TRIDIMENSIONNELLE

(30) Priorität: 21.10.2014 DE 102014115331
(43) Veröffentlichungstag der Anmeldung: 27.04.2016
(73) Patentinhaber: Isra Surface Vision GmbH, 45699 Herten (DE)
(72) Erfinder: KUBIAK, Dr. Rolf, 44269 Dortmund (DE); RIPPERDA, Dr. Christian, 50678 Köln (DE)
(74) Vertreter: Keil & Schaafhausen Patentanwälte PartGmbB

(56) Entgegenhaltungen:
- EP-A2- 0 834 837
- WO-A1-2009/102490
- CN-B- 102 243 074
- FR-A1- 2 951 544
- JP-A- 2007 048 084
- US-A1- 2008 158 239

## Beschreibung

Die vorliegende Erfindung betrifft ein Verfahren zur Ermittlung einer Verzerrung des durch eine Reflexion an einem reflektierenden Gegenstand entstehenden Bilds eines Objekts sowie eine Vorrichtung hierfür.

Dokument WO 2009/102490 A1 offenbart ein Verfahren zur Bestimmung der Form der Oberfläche und einer optischen Verzerrung durch optische Abbildung in Reflexion. Hierbei wird die Form der Oberfläche und die Verzerrung aus einer Richtung anhand eines auf der Oberfläche abgebildeten Referenzmusters gemessen. Ein weiteres Verfahren zur Bestimmung der Qualität einer reflektierenden Einheit mittels Reflexion eines Testmusters an der Oberfläche der Einheit zeigt und beschreibt die Druckschrift FR 2 951 544 A1.

Wenn ein Objekt in einem mit einer reflektierenden Oberfläche versehenen, Gegenstand gespiegelt wird, so entstehen insbesondere aufgrund von Unregelmäßigkeiten auf der Oberfläche des Gegenstands Verzerrungen wie Formänderungen, Verkleinerungen, Vergrößerungen oder Krümmungsänderungen. Die Verzerrungen bewirken, dass das Bild des Objekts anders erscheint als das Objekt in Wirklichkeit aussieht.

Bei der Betrachtung von reflektierenden Gegenständen wie spiegelnden Fassaden oder Scheiben von Automobilen wird häufig gefordert, dass die Außenwelt an der reflektierenden Oberfläche dieses Gegenstands möglichst verzerrungsfrei wiedergegeben wird. Verzerrungen bei der Wiedergabe eines Objekts führen häufig zu ästhetischen Problemen in Bezug auf den spiegelnden Gegenstand selbst. Beispielsweise soll bei Automobilen eine möglichst gleichmäßige Kontur wahrgenommen werden. Große Verzerrungen in Reflexion führen beim Betrachter zu einer nicht akzeptablen Anmutung des Automobils.

Die Aufgabe besteht somit darin, ein einfaches, kostengünstiges und schnelles Verfahren zur Beurteilung von Verzerrungen in einem durch eine Reflexion an einem reflektierenden Gegenstand entstehenden Bild eines Objekts anzugeben beziehungsweise eine einfache und kostengünstige Vorrichtung zur Durchführung dieses Verfahrens zu schaffen.

Die obige Aufgabe wird durch ein Verfahren nach Anspruch 1 gelöst.

Die obige Erfindung beruht auf der Erkenntnis, dass optische Verzerrungen in Reflexion durch Krümmungen und insbesondere durch Änderungen von Krümmungen hervorgerufen werden. Große Änderungen von Krümmungen, insbesondere über eine kurze Distanz, führen zu einer scheinbaren Bewegung eines reflektierten Gegenstands, wenn sich der Betrachtungswinkel, z.B. durch eine Bewegung des spiegelnden Gegenstands relativ zum Betrachter, ändert. Die Krümmungen beziehungsweise Änderungen von Krümmungen in der Oberfläche des spiegelnden Gegenstands können auch als Änderung des Brechwerts an dieser Stelle dargestellt werden.

Erfindungsgemäß wird daher zunächst die dreidimensionale Form der Oberfläche des reflektierenden Gegenstands ermittelt. Die dreidimensionale Form der Oberfläche beinhaltet die Information hinsichtlich der Krümmungen der Oberfläche in allen ihren Punkten. Die Krümmungen an einer bestimmten Stelle der Oberfläche des Gegenstands entspricht den jeweiligen Brechwerten an dieser Stelle.

In einem bevorzugten Ausführungsbeispiel werden die dreidimensionale Form der Oberfläche des reflektierenden Gegenstands, und somit auch die Krümmungen der Oberfläche in jedem Punkt, mithilfe einer Kamera mittels Deflektometrie bestimmt. Mit deflektometrischen Messungen lässt sich die dreidimensionale Form des Gegenstands erfassen, ohne dass Referenzmarken benötigt werden. Hierfür kann bei großen spiegelnden Gegenständen mit einer großen Oberfläche vorzugsweise so vorgegangen werden, dass der spiegelnde Gegenstand zunächst abschnittsweise mit mehreren Kameras vermessen wird. Aus diesen Messwerten lässt sich die Oberflächenform rechnerisch zu einer dreidimensionalen Gesamtform der Oberfläche zusammensetzen. Alternativ kann die dreidimensionale Form der Oberfläche des reflektierenden Gegenstands mittels Verfahren mit Referenzmarken, mittels rein mechanischer, taktiler Messungen oder mittels einer Vermessung von diffus reflektierenden Oberflächen durch Triangulation bestimmt werden.

Wie oben bereits dargestellt wurde, lassen sich aus den Krümmungen des reflektierenden Gegenstands, die für eine bestimmte Blickrichtung und einen bestimmten Punkt der Oberfläche wirksam sind, rechnerisch die Brechkräfte in diesem Punkt ermitteln. In diesem Zusammenhang wurde erkannt, dass sich die aus den Krümmungen berechenbaren Brechkräfte ändern, wenn der Betrachter unter verschiedenen Betrachtungswinkeln auf den reflektierenden Gegenstand blickt. Somit können Effekte hinsichtlich der Verzerrung, die durch Änderung des Betrachtungswinkels entstehen, basierend auf der bekannten dreidimensionalen Oberflächenform des Gegenstands bestimmt werden. Hierfür wird bei der Berechnung angenommen, dass in jeder gewünschten Blickrichtung eine virtuelle Kamera angeordnet ist. Das reflektierte Bild des Objekts aus Sicht einer solchen virtuellen Kamera wird dann ermittelt. Die Verzerrungen des Objektbilds, welche sich aus verschiedenen Betrachtungswinkeln ergeben, werden auch unter dem Begriff dreidimensionale Verzerrung zusammengefasst.

Das erfindungsgemäße Verfahren hat den Vorteil, dass die dreidimensionale Verzerrung nach nur einer Vermessung des reflektierenden Gegenstands ermittelt werden kann. Durch das erfindungsgemäße Verfahren wird der zeitliche Aufwand für die Beurteilung eines spiegelnden Gegenstands hinsichtlich seiner dreidimensionalen Verzerrung minimiert, da lediglich die dreidimensionale Oberflächenform des spiegelnden Gegenstands bestimmt werden muss. Durch das erfindungsgemäße Verfahren ist ein Umbau einer Messvorrichtung für die Ermittlung einer dreidimensionalen Verzerrung durch reale Kameras aus verschiedenen Blickwinkeln nicht mehr erforderlich, so dass auch der zeitliche Aufwand für die Beurteilung eines reflektierenden Gegenstands minimiert wird.

Ein weiterer Vorteil des erfindungsgemäßen Verfahrens besteht darin, dass das Verfahren für beliebige abzubildende Objekte angewendet werden kann. Das Objekt kann beispielsweise ein Rechteckgitter oder ein beliebiges zwei- oder dreidimensionales Objekt darstellen.

Ferner kann die Verzerrung für beliebige Blickwinkel auf die Oberfläche des reflektierenden Gegenstands untersucht werden. Das erfindungsgemäße Verfahren ist daher sehr flexibel und kann schnell an die verschiedenen, jeweils von einem Auftraggeber vorgegebenen Vorgaben hinsichtlich des Blickwinkels angepasst werden.

Vorzugsweise wird das erfindungsgemäße Verfahren im Rahmen der automatischen Qualitätsprüfung von reflektierenden Gegenständen eingesetzt. Wie oben beschrieben, wird hierfür die dreidimensionale Form der Oberfläche bestimmt und hieraus automatisch die dreidimensionale Verzerrung basierend auf den Vorgaben des jeweiligen Auftraggebers zu dem reflektierenden Gegenstand z.B. hinsichtlich Blickwinkel und/oder Form und/oder Lage des Objekts ermittelt. Die Daten zur Verzerrung werden dann mit den Vorgaben des Auftraggebers hinsichtlich der Verzerrung verglichen. Abhängig von dem Vergleich der ermittelten Verzerrungsdaten basierend auf der dreidimensionalen Form der Oberfläche mit den vorgegebenen Verzerrungsdaten wird dann entschieden, ob der reflektierende Gegenstand den Qualitätsanforderungen des jeweiligen Auftraggebers entspricht oder nicht. Falls er nicht den Qualitätsanforderungen des Auftraggebers entspricht, wird z.B. ein Fehler gemeldet (beispielsweise ein Fehler optisch und/oder akustisch angezeigt) und/oder der jeweilige Gegenstand aus dem Produktionsprozess ausgesondert.

Im Rahmen des erfindungsgemäßen Verfahrens müssen die reflektierenden Gegenstände nicht notwendigerweise einen 100%igen Reflexionsgrad besitzen, da dieser im Rahmen der Berechnung der dreidimensionalen Verzerrung variiert werden kann. Der Reflexionsgrad, den die reflektierende Oberfläche aufweist, kann auf einen beliebigen Wert, z.B. 100%, eingestellt werden. Dabei wird unter Reflexionsgrad das Verhältnis zwischen reflektierter und einfallender Lichtintensität verstanden. Mit dem erfindungsgemäßen Verfahren ist es sogar möglich, nicht reflektierenden Gegenständen einen Reflexionsgrad von 100% zuzuweisen und die dreidimensionale Verzerrung zu untersuchen.

Die obige Aufgabe wird ferner durch eine Vorrichtung nach Anspruch 5 gelöst.

Die erfindungsgemäße Vorrichtung ist erfindungsgemäß zur Berechnung der Verzerrungen der Bilder des Objekts aus verschiedenen Blickrichtungen eingerichtet, wobei hierfür die Recheneinheit in jeder gewünschten Blickrichtung eine virtuelle Kamera anordnet und das reflektierte Bild des Objekts aus Sicht dieser virtuellen Kamera basierend auf den Daten zur dreidimensionalen Form der Oberfläche ermittelt.

Die Bestimmungseinheit der erfindungsgemäßen Vorrichtung bestimmt die Form der Oberfläche des Gegenstands mithilfe einer Kamera vorzugsweise mittels Deflektometrie.

Die Recheneinheit der erfindungsgemäßen Vorrichtung ist ferner dazu eingerichtet, die Verzerrung des Bilds des Objekts in eine Blickrichtung, die in dem jeweiligen Punkt der Normalen auf der Oberfläche des Gegenstands entspricht, für jeden Punkt der Oberfläche zu bestimmen.

Weiter kann mittels der Recheneinheit der Reflexionsgrad der Oberfläche des Gegenstands variiert werden.

Die erfindungsgemäße Vorrichtung weist die gleichen Vorteile wie das oben angegebene Verfahren auf und ist zur Durchführung der oben angegebenen Verfahrensschritte eingerichtet.

Mit den ermittelten Ergebnissen können reflektierende Gegenstände (oder auch nicht reflektierende Gegenstände), beispielsweise Scheiben von Automobilen oder Fassadenscheiben, nach den Kriterien Form, Formänderung, Krümmung, Krümmungsänderung, Vergrößerung oder Verkleinerung von Objekten bei der Reflexion z.B. im Rahmen einer Qualitätsprüfung beurteilt werden. Dazu können durch das erfindungsgemäße Verfahren beziehungsweise die erfindungsgemäße Vorrichtung unterschiedliche Grenzwerte abgeprüft werden, welche in unterschiedlichen Anforderungskatalogen der Auftraggeber für die Herstellung derartiger reflektierender Gegenstände vorgegeben werden.

In einem bevorzugten Ausführungsbeispiel wird die Verzerrung des Objektbilds in eine Blickrichtung, welche der Oberflächennormalen in einem bestimmten Punkt (= Auftreffpunkt des Sichtstrahls auf die Oberfläche) entspricht, für jeden Punkt der Oberfläche des reflektierenden Gegenstands bestimmt. Ein derartiges Verfahren ist insbesondere im Hinblick auf Industrieprodukte vorteilhaft, die reflektierende Gegenstände darstellen, da hierdurch die minimalen optischen Effekte bestimmt werden können, die unvermeidlich durch die Form des spiegelnden Gegenstands vorgegeben sind.

Weitere Vorteile, Merkmale und Anwendungsmöglichkeiten der vorliegenden Erfindung ergeben sich auch aus der nachfolgenden Beschreibung eines Ausführungsbeispiels und den Figuren. Der Schutzumfang der vorliegenden Erfindung ist in den Ansprüchen definiert.

Es zeigen schematisch:
- Figur 1: ein erstes Teilsystem einer erfindungsgemäßen Vorrichtung zur Ermittlung einer dreidimensionalen Verzerrung in einer Ansicht von der Seite und
- Figur 2: ein zweites Teilsystem einer erfindungsgemäßen Vorrichtung zur Ermittlung einer dreidimensionalen Verzerrung.

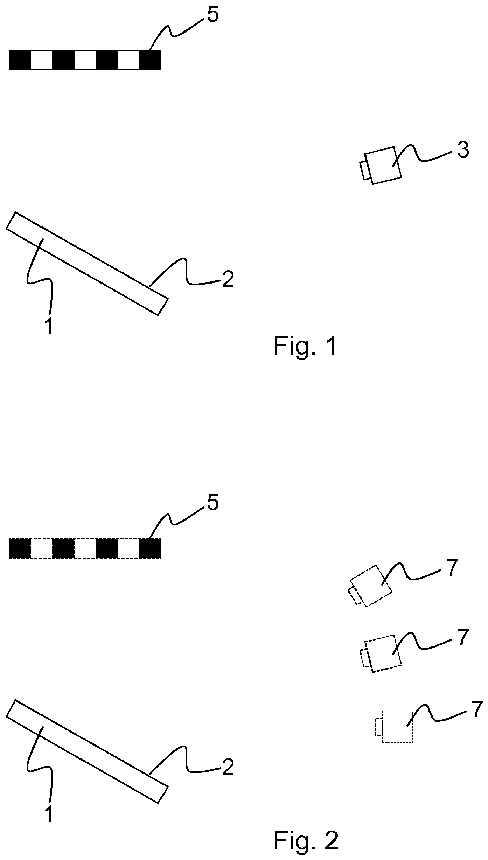

In Figur 1 ist ein reflektierender Gegenstand in Form einer Scheibe 1 für ein Fenster eines Automobils mit einer reflektierenden Oberfläche 2 dargestellt, welche durch eine Kamera (reale Kamera) 3 beobachtet wird. Insbesondere beobachtet die Kamera 3 das durch Reflexion an der Oberfläche 2 der Scheibe 1 erzeugte Bild eines Objekts in Form eines Gitters, z.B. eines regelmäßigen Gitters, beispielsweise eines quadratischen Gitters 5. Ein beliebiges anderes Objekt kann ebenfalls für die deflektometrische Messung verwendet werden. Bei einer großen Scheibe 1 können auch mehrere Kameras eingesetzt werden, welche verschiedene Bereiche der Oberfläche der Scheibe 1 erfassen.

Mittels Deflektometrie wird durch eine Bestimmungseinrichtung der erfindungsgemäßen Vorrichtung basierend auf dem mittels der Kamera 3 aufgenommenen Bild des Objekts die dreidimensionale Form der Oberfläche 2 der Scheibe 1 ermittelt. Bei der Verwendung mehrerer Kameras wird aus den unterschiedlichen Messungen die dreidimensionale Form der Oberfläche 2 der Scheibe 1 zusammengesetzt.

Um die dreidimensionale Verzerrung des Gitters 5 zu bestimmen, berechnet die erfindungsgemäße Vorrichtung nun mittels einer entsprechend eingerichteten Recheneinheit, wie in Figur 2 dargestellt, basierend auf der ermittelten dreidimensionalen Form der Oberfläche 2, den sich daraus ergebenden Krümmungen in allen Punkten der Oberfläche 2 und Brechkräften bei unterschiedlichen Blickrichtungen die Verzerrung des Gitters 5 aus den unterschiedlichen Blickrichtungen. Hierzu nimmt die Recheneinheit an, dass eine virtuelle Kamera 7 aus der jeweiligen Blickrichtung auf den spiegelnden Gegenstand 1 blickt. Hieraus wird z.B. mittels Ray Tracing das Bild des (virtuellen) Gitters 5 bei Reflexion dieses Gitters 5 an der Oberfläche 2 des Gegenstands 1 und dessen Verzerrung berechnet. Hieraus kann die Recheneinheit Verzerrungseffekte bei Änderung des Betrachtungswinkels, d.h. die dreidimensionale Verzerrung, leicht ermitteln. Das Gitter 5 wird für die Berechnung der dreidimensionalen Verzerrung ebenfalls als ein virtuelles Gitter zur Verfügung gestellt.

Im Rahmen einer Qualitätsprüfung kann durch die Recheneinheit die ermittelte dreidimensionale Verzerrung der Scheibe mit Vorgaben des Auftraggebers verglichen und entschieden werden, ob die ermittelte Verzerrung der Scheibe 1 den Vorgaben entspricht. Ist dies nicht der Fall, wird die Scheibe 1 aus dem Produktionsprozess ausgesondert.

### Bezugszeichenliste

- 1: Scheibe
- 2: Oberfläche der Scheibe
- 3: Kamera
- 5: Gitter
- 7: virtuelle Kamera

## Patentansprüche

1. Verfahren zur Ermittlung einer Verzerrung des durch eine Reflexion an einem reflektierenden Gegenstand (1) entstehenden Bilds eines Objekts (5), wobei das Objekt (5) in einem vorgegebenen Abstand von dem Gegenstand (1) angeordnet wird, wobei zunächst die dreidimensionale Form der Oberfläche (2) des Gegenstands (1) ermittelt wird, **dadurch gekennzeichnet, dass** anschließend basierend auf der bekannten dreidimensionalen Form der Oberfläche (2) die Verzerrungen der Bilder des Objekts (5), wobei die Bilder des Objekts (5) durch Reflexion an der Oberfläche (2) des Gegenstands (1) entstehen, aus verschiedenen Blickrichtungen berechnet werden und somit eine dreidimensionale Verzerrung ermittelt wird, wobei zur Berechnung der Verzerrungen der Bilder des Objekts (5) aus verschiedenen Blickrichtungen in jeder gewünschten Blickrichtung eine virtuelle Kamera (7) angeordnet und das an dem Gegenstand (1) reflektierte Bild des Objekts (5) aus Sicht dieser virtuellen Kamera (7) ermittelt wird.

2. Verfahren nach Anspruch 1, **dadurch gekennzeichnet, dass** die Form der Oberfläche (2) des spiegelnden Gegenstands mithilfe einer Kamera (3) mittels Deflektometrie bestimmt wird.

3. Verfahren nach einem der vorhergehenden Ansprüche, **dadurch gekennzeichnet, dass** die Verzerrung des Bilds des Objekts (5) in eine Blickrichtung, die in dem jeweiligen Punkt der Normalen auf der Oberfläche (2) des spiegelnden Gegenstands (1) entspricht, für jeden Punkt der Oberfläche (2) bestimmt wird.

4. Verfahren nach einem der vorhergehenden Ansprüche, **dadurch gekennzeichnet, dass** der Reflexionsgrad der Oberfläche des Gegenstands variiert wird.

5. Vorrichtung zur Ermittlung einer dreidimensionalen Verzerrung des durch eine Reflexion an einem reflektierenden Gegenstand (1) entstehenden Bilds eines Objekts (5) mit einer realen Kamera (3), wobei das Objekt (5) in einem vorgegebenen Abstand von dem Gegenstand (1) angeordnet ist, wobei die Vorrichtung dazu eingerichtet ist, zunächst die dreidimensionale Form der Oberfläche (2) des Gegenstands (1) mit der realen Kamera (3) zu ermitteln, **dadurch gekennzeichnet, dass** die Vorrichtung außerdem dazu eingerichtet ist, anschließend basierend auf der bekannten dreidimensionalen Form der Oberfläche (2) die Verzerrungen der Bilder des Objekts (5), wobei die Bilder des Objekts (5) durch Reflexion an der Oberfläche (2) des Gegenstands (1) entstehen, aus verschiedenen Blickrichtungen zu berechnen und somit die dreidimensionale Verzerrung zu ermitteln, wobei zur Berechnung der Verzerrungen der Bilder des Objekts aus verschiedenen Blickrichtungen in jeder gewünschten Blickrichtung eine virtuelle Kamera (7) angeordnet und das an dem Gegenstand (1) reflektierte Bild des Objekts (5) aus Sicht dieser virtuellen Kamera (7) ermittelt wird.

6. Vorrichtung nach Anspruch 5, welche dazu eingerichtet ist, die Form der Oberfläche (2) des Gegenstands mithilfe der Kamera (3) mittels Deflektometrie zu bestimmen.

7. Vorrichtung nach einem der Ansprüche 5 bis 6, welche dazu eingerichtet ist, die Verzerrung des Bilds des Objekts (5) in eine Blickrichtung, die in dem jeweiligen Punkt der Normalen auf der Oberfläche (2) des Gegenstands (1) entspricht, für jeden Punkt der Oberfläche (2) zu bestimmen.

8. Vorrichtung nach einem der Ansprüche 5 bis 7, **dadurch gekennzeichnet, dass** der Reflexionsgrad der Oberfläche des Gegenstands variierbar ist.

## Claims

1. Method for determining a distortion of the image of an object (5) produced by a reflection on a reflecting subject (1), the object (5) being arranged at a predetermined distance from the subject (1), wherein the three-dimensional shape of the surface (2) of the subject (1) is first determined, **characterized in that**, based on the known three-dimensional shape of the surface (2), the distortions of the images of the object (5) are subsequently calculated from different viewing directions and a three-dimensional distortion is thus determined, wherein the images of the object (5) are created by reflection on the surface (2) of the subject (1), wherein a virtual camera (7) is arranged in each desired viewing direction in order to calculate the distortions of the images of the object (5) from different viewing directions, and the image of the object (5) reflected on the subject (1) is determined from the viewpoint of this virtual camera (7).

2. Method according to claim 1, **characterized in that** the shape of the surface (2) of the reflecting subject is determined with the aid of a camera (3) by means of deflectometry.

3. Method according to one of the preceding claims, **characterized in that** the distortion of the image of the object (5) in a viewing direction corresponding at the respective point to the perpendicular to the surface (2) of the reflecting subject (1) is determined for each point of the surface (2).

4. Method according to any one of the preceding claims, **characterized in that** the reflectance of the surface of the subject is varied.

5. Apparatus for determining a three-dimensional distortion of the image of an object (5) formed by a reflection on a reflecting subject (1) with a real camera (3), the object (5) being arranged at a predetermined distance from the subject (1), the device being arranged to first determine the three-dimensional shape of the surface (2) of the subject (1) with the real camera (3), **characterized in that** the device is further arranged to subsequently, based on the known three-dimensional shape of the surface (2), calculate the distortions of the images of the objects (5), the images of the object (5) being created by reflection from different viewing directions on the surface (2) of the subject (1) and thus to determine the three-dimensional distortion, wherein, in order to calculate the distortions of the images of the object from different viewing directions, a virtual camera (7) is arranged in each desired viewing direction, and the image of the object (5) reflected at the subject (1) is determined from the viewpoint of this virtual camera (7).

6. Apparatus according to claim 5, which is arranged to determine the shape of the surface (2) of the subject with the aid of the camera (3) by means of deflectometry.

7. Apparatus according to any one of claims 5 to 6, which is arranged to determine the distortion of the image of the object (5) in a viewing direction corresponding to the perpendicular at the respective point on the surface (2) of the subject (1) for each point of the surface (2).

8. Device according to any of claims 5 to 7, **characterized in that** the reflectance of the surface of the subject is variable.

## Revendications

1. Procédé de détermination d'une déformation de l' image d'un objet (5) créée par un réfléchissement sur un objet réfléchissant (1), sachant que l'objet (5) est disposé à une distance prédéfinie de l'objet (1), sachant que la forme tridimensionnelle de la surface (2) de l'objet (1) est d'abord déterminée, **caractérisé en ce qu'**ensuite en se basant sur la forme tridimensionnelle connue de la surface (2), les déformations des images de l'objet (5) sont calculées à partir de différentes directions de visée, sachant que les images de l'objet (5) sont créées par réfléchissement sur la surface (2) de l'objet (1) et que de ce fait une déformation tridimensionnelle est déterminée, sachant que pour le calcul des déformations des images de l'objet (5) à partir de différentes directions de visée, une caméra virtuelle (7) est disposée dans chaque direction de visée souhaitée et l'image de l'objet (5) réfléchie sur l'objet (1) est déterminée à partir de la vision de cette caméra virtuelle (7).

2. Procédé selon la revendication 1, **caractérisé en ce que** la forme de la surface (2) de l'objet réfléchissant est déterminée à l'aide d'une caméra (3) au moyen de la déflectométrie.

3. Procédé selon l'une quelconque des revendications précédentes, **caractérisé en ce que** la déformation de l'image de l'objet (5) est déterminée pour chaque point de la surface (2) dans une direction de visée, qui correspond dans le point respectif à la normale sur la surface (2) de l'objet (1) réfléchissant.

4. Procédé selon l'une quelconque des revendications précédentes, **caractérisé en ce que** le degré de réfléchissement de la surface de l'objet peut être modifié.

5. Dispositif de détermination d'une déformation tridimensionnelle d'une image d'un objet (5), se formant par un réfléchissement sur un objet (1) réfléchissant avec une caméra réelle (3), sachant que l'objet (5) est disposé à une distance prédéfinie de l'objet (1), sachant que le dispositif est agencé pour déterminer d'abord la forme tridimensionnelle de la surface (2) de l'objet (1) avec la caméra réelle (3), **caractérisé en ce que** le dispositif est en outre agencé pour calculer à partir de différentes directions de visée les déformations des images de l'objet (5), en se basant ensuite sur la forme tridimensionnelle connue de la surface (2), sachant que les images de l'objet (5) sont créées par réfléchissement sur la surface (2) de l'objet (1) et déterminer ainsi la déformation tridimensionnelle, sachant que pour le calcul des déformations des images de l'objet à partir de différentes directions de visée, une caméra virtuelle (7) est disposée dans chaque direction de visée souhaitée et l'image de l'objet (5) réfléchie sur l'objet (1) est déterminée à partir de la vision de cette caméra virtuelle (7).

6. Procédé selon la revendication 5, lequel est agencé pour définir la forme de la surface (2) de l'objet à l'aide de la caméra (3) par déflectométrie.

7. Procédé selon l'une quelconque des revendications 5 à 6, lequel est agencé pour déterminer la déformation de l'image de l'objet (5) pour chaque point de la surface (2), dans une direction de visée, qui correspond dans le point respectif à la normale sur la surface (2) de l'objet (1).

8. Dispositif selon l'une quelconque des revendications 5 à 7, **caractérisé en ce que** le degré de réfléchissement de la surface de l'objet est variable.
